# EUROPEAN PATENT APPLICATION

(11) **EP 2 784 571 A2**
(43) Date of publication of application: **01.10.2014**
(21) Application number: 14157120.8
(22) Date of filing: 28.02.2014
(51) Int. Cl.: G02B 27/01, G03B 21/28, H04N 9/31, G02B 26/10

(54) **Projector device and head-up display device**

(30) Priority: 29.03.2013 JP 2013071684
(71) Applicant: Funai Electric Co., Ltd., Daito city Osaka 574-0013 (JP)
(72) Inventor: Azuma, Akihiro, Osaka 574-0013 (JP); Hirano, Atsuya, Osaka 574-0013 (JP)
(74) Representative: Osha Liang SARL

(57) **Abstract**

A projector device (9) comprising:
a plurality of light sources (11a, 11b, 11c) that emits lights of mutually differing colors, wherein the projector device (1) displays a projected image by scanning the lights emitted by the plurality of light sources (11a, 11b, 11c);
an optical axis misalignment detector (4) that detects a degree of optical axis misalignment among the plurality of light sources (11a, 11b, 11c); and
a correction unit (254) that corrects a timing of the emission of the plurality of light sources (11a, 11b, 11c) to minimize the degree of optical axis misalignment among the plurality of light sources (11a, 11b, 11c).

## Description

### [Field of the Invention]

The present invention generally relates to a projector device and a head-up display (HUD) comprising such a projector device.

### [Background Art]

Conventionally, as shown in Patent Literature 1, HUD devices provided with a projector device are used in vehicles, for example. Using this type of HUD device, a user can visually recognize an image of the outside world in front of the vehicle and a projected image at the same time.

The projector device provided to the HUD device is provided with light sources of various colors (generally laser diodes) which form a projected video image by scanning lights of various colors. To display the video image correctly, consideration must be given to prevent misalignment from occurring in the scanning of the laser lights of various colors.

### [Patent Literature]

[Patent Literature 1] JP 2011-180541 A

Optical axes of the light sources sometimes become misaligned in the projector device. Especially when the ambient temperature rises, the housing or adhesive becomes deformed, resulting in the locations where optical components are attached tending to fluctuate. As a result, the optical axes of the light sources can become misaligned compared to their initial adjustment.

Therefore, scanning of the lights of various colors also sometimes becomes misaligned, due to the misalignment of the optical axes of the light sources relative to one another. When such misalignment occurs in scanning, there is the risk of an optimal video image display becoming hindered. The present invention is devised in light of this problem and has as an object to provide a projector device whereby misalignment of scanning accompanying misalignment of optical axes in light sources can be minimized, and an HUD device provided therewith.

### [Summary of the Invention]

A projector device according to one or more embodiments of the present invention may comprise a plurality of light sources that emits lights of mutually differing colors; an optical axis misalignment unit that acquires correction amount information in correspondence to the degree of optical axis misalignment; and a correction unit or circuit that corrects a timing of the emission of the plurality of light source to minimize the degree of optical axis misalignment among the plurality of light sources.

A projector device according to one or more embodiments may comprise a correction amount information acquisition unit that acquires correction amount information in correspondence to the degree of optical axis misalignment. The correction unit may use the correction amount information to correct the timing of the emission of the plurality of light sources.

A projector device according to one or more embodiments may comprise a temperature detector. The projector device may execute a first operation to store correction amount information along with a temperature detected by the temperature detector when correction amount information acquisition unit acquires the correction amount information. Further, the projector device may execute a second operation to determine the correction amount information based on information stored prior to the correction unit correcting the timing of the emission of the plurality of light sources.

A projector device according to one or more embodiments may display a projected image of a video image in a normal operational state when the projector device is not in the normal operational state. The projector device may also execute the second operation when in the normal operational state. With this configuration, it may be easy to update the correction amount in the normal operational state while preventing display of the projected video image from becoming hindered.

A projector device according to one or more embodiments may be such that the first operation is executed when the projector device transitions from a powered-down state to the normal operational state. Alternatively, one or more embodiments may be that the first operation is executed when the projector device transitions from the normal operational state to the powered-down state. Alternatively, one or more embodiments may be that the first operation is executed when a request is received in the normal operation state.

A projector device according to one or more embodiments may comprise a light position sensor. The optical axis misalignment detector may execute a measurement operation that measures a position of light for each of a plurality of light sources in the light position sensor and the degree of optical axis misalignment is detected based on a result of the measurement.

A projector device according to one or more embodiments may be such that each of the plurality of light sources emits light in sequence to an area outside an area where the projected image of the video image is displayed. Further, a portion of the emitted light may enter the light position sensor

A projector device according to one or more embodiments may be such that the plurality of light sources comprises at least three laser diodes. The optical axis misalignment detector may use one of the plurality of light sources as a reference light source to detect, for each of the other plurality of light sources, the degree of optical axis misalignment with respect to an axis of the reference light source.

A projector device according to one or more embodiments may be such that the optical axis misalignment detector detects the smallest degree of the optical axis misalignment among the plurality of light source using a predetermined reference axis and uses the plurality of light source as the reference light source.

An HUD device according to one or more embodiments of the present invention may comprise a projector device according to one or more of the above embodiments. Further, a projecting method according to one or more embodiments of the present invention may comprise emitting lights of mutually differing colors by a plurality of light sources; displaying a projected image by scanning the lights emitted by the plurality of light sources; detecting a degree of optical axis misalignment among the plurality of light sources; and correcting a timing of the emission of the plurality of light sources to minimize the degree of optical axis misalignment among the plurality of light sources.

With the projector device according to the above one or more embodiments of the present invention, for example, misalignment in scanning accompanying optical axis misalignment among light sources can be minimized. With an HUD device according to the present invention, the benefits of the projector device according to the present invention may be enjoyed.

### [Brief Description of the Drawings]

FIG. 1 is a schematic view of an HUD device according to one or more embodiments.
FIG. 2 is a configuration view of an HUD unit according to one or more embodiments.
FIG. 3 is a configuration view of a projector and surroundings according to one or more embodiments.
FIG. 4 is a flow chart relating to overall operation of the HUD unit according to one or more embodiments.
FIG. 5 is a descriptive view relating to misalignment of scanning among light diffusion sheet according to one or more embodiments.
FIG. 6 is a flow chart relating to a correction amount information acquisition process according to one or more embodiments.
FIG. 7 is a descriptive view relating to a CW light emission area according to one or more embodiments.
FIG. 8 is a timing chart relating to the correction amount information acquisition process according to one or more embodiments.
FIG. 9 is a configuration view of an HUD unit according to one or more embodiments.
FIG. 10 is a descriptive view relating to LUT information according to one or more embodiments.
FIG. 11 is a flow chart relating to a correction amount information updating process according to one or more embodiments.
FIG. 12A is a descriptive view relating to calculation of a correction amount according to one or more embodiments.
FIG. 12B is a descriptive view relating to calculation of a correction amount according to one or more embodiments.
FIG. 13 is a flow chart relating to an initial operation according to one or more embodiments.
FIG. 14 is a flow chart relating to a correction process according to one or more embodiments.
FIG. 15 is a flow chart relating to a shutdown process according to one or more embodiments.

### [Detailed Description of Embodiments of the Invention]

One or more embodiments of the present invention are described below, using as an example an HUD device for a vehicle.

### 1. First Example

### [Configurations of the HUD Device]

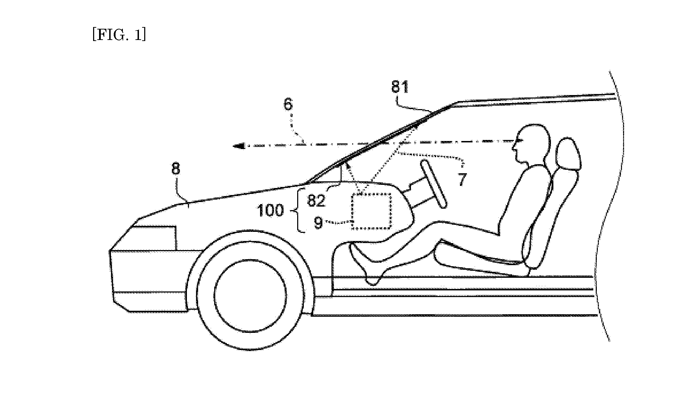

FIG. 1 is a schematic view of an HUD device 100 according to one or more embodiments. The HUD device 100 is mounted in a vehicle 8. The HUD device 100 may be mounted on another type of passenger vehicle (e.g., an airplane), and not just on an automotive vehicle.

The HUD device 100 includes an HUD unit 9 which comprises a projector and a combiner 82. The HUD device 100 is a display device that projects scanning laser light 7 (projected light) from the HUD unit 9 to onto a windshield 81 of the vehicle 8, displaying a projected image within a field of vision of a user. The dotted arrow 6 in FIG. 1 indicates the line of sight of the user when sitting in the driver's seat of the vehicle 8.

As shown in FIG. 1, the combiner 82, which is formed using a semitransparent reflective material, such as a half-mirror for example, may be attached to an inner surface of the windshield 81. A false image is formed in a predetermined area of the combiner 82 by the HUD unit 9 projecting the scanning laser light 7 onto the combiner 82. Therefore, the user looking towards the front of the vehicle (i.e., along the line of sight 6) simultaneously visually perceives the outside world in front of the vehicle 8 and the projected image formed by the HUD unit 9.

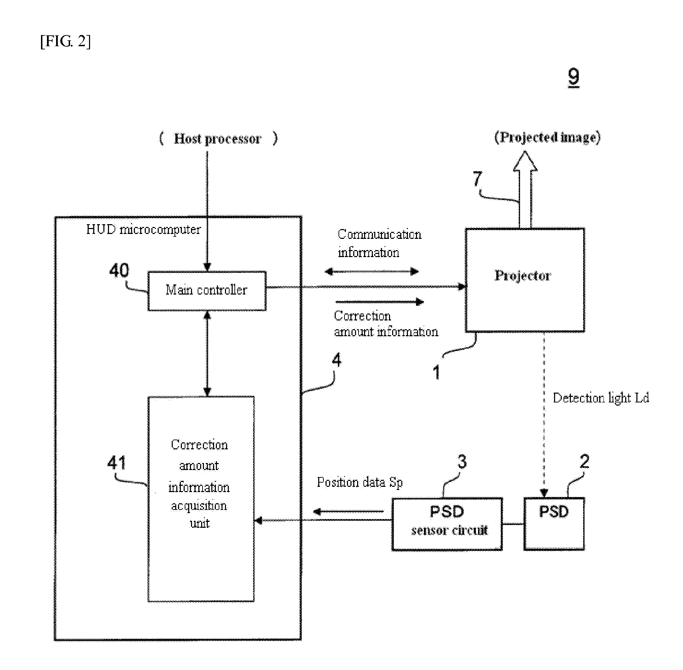

FIG. 2 is a configuration view of the HUD unit 9. The HUD unit 9 shown in the drawing comprises a projector 1, a PSD (position sensitive detector: light position sensor) 2, a PSD sensor circuit 3, and an HUD microcomputer 4.

The projector 1 may comprise laser diodes (light sources) which emit lights of mutually differing colors and executes various operations according to control commands from the HUD microcomputer 4. The constitution and operations of the projector 1 are described in greater detail below.

The PSD 2 is disposed in a location where a detection light Ld (one part of light emitted from the laser diodes) enters from the projector 1. The PSD 2 detects the location of a light spot formed by the detection light Ld and sends a signal of the detection result to the PSD sensor circuit 3.

The PSD sensor circuit 3 functions as an I-V amp that performs current-voltage conversion on the detection signal received from the PSD 2. The PSD sensor circuit 3 outputs position information Sp corresponding to the position of the light spot of the detection light Ld to the HUD microcomputer 4. The PSD 2 and the PSD sensor circuit 3 may be provided inside the projector 1, for example.

The HUD microcomputer 4 may be provided with a main controller 40 and a correction amount information acquisition unit 41.

The main controller 40 may control various parts such that the HUD microcomputer 4 functions properly. The main controller 40 may control various parts of the HUD microcomputer 4 in accordance with control commands from a host processor, which may be higher in the control system. The main controller 40 may send and receive various types of communication data to and from a projector 44.

The correction amount information acquisition unit 41 may acquire information of the correction amount based on the position information Sp. The correction amount information thus acquired may be sent to the projector 1 and used in a predetermined correction process (a process of correcting light emission timings, described below) in the projector 1. The format of the correction amount information may be any format wherein the correction amount can be specified in the correction process, and is not limited to a format in which the correction amount is expressed as-is in the correction process. The details, purpose, and so on of the correction process shall be given in a later description.

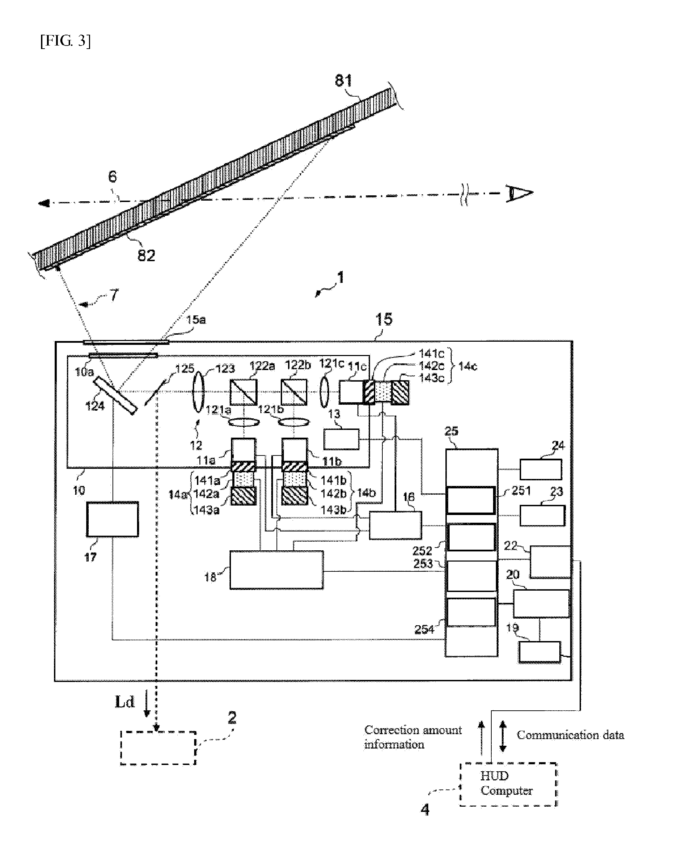

A constitution of the projector 1 is described next. FIG. 3 is a configuration view of the projector 1 and surroundings. The projector 1 shown in the drawing may be provided with a housing 10, laser diodes (11a to 11c), an optical system 12, a thermistor 13, and heating and cooling parts (14a to 14c). In the following description, the laser diodes are sometimes referred to as "LD."

The projector 1 may be further provided with a main enclosure 15, an LD driver 16, a mirror servo part 17, a heating and cooling driver 18, a power source 19, a power source controller 20, an input and output I/F 22, an operation part 23, a storage part 24, and a control unit 25.

The housing 10 may be an airtight housing in which the LDs (11a to 11c), the optical system 12, the thermistor 13, and the heating and cooling parts (14a to 14c) may be mounted. A window 10a for emitting scanning laser light 7 which is emitted from the optical system 12 to the outside and an opening (not shown in the drawings) in which heat conducting members 141 a to 141 c, described later, are disposed may be formed in the housing 10. The window 10a may be formed by glass or a transparent resin material, for example.

The LD 11a is a light emitting element which may emit a blue laser light (a blue LD). The LD 11b is a light emitting element may emit a green laser light (a green LD). The LD 11c is a light emitting element which may emit a red laser light (a red LD).

The optical system 12 may comprise collimator lenses (121a to 121c), beam splitters (122a, 122b, 125), a focusing lens 123, and a MEMS mirror 124.

The collimator lenses (121a to 121c) are optical elements that may convert laser light into parallel light beams. The beam splitters (122a, 122b) are optical elements, dichroic mirrors, for example, which may reflect light at specific wavelengths and allow light at other wavelengths to pass through. The beam splitter 125 may be an optical element which splits part of the laser light as the detection light Ld and may guide it to the PSD 2.

As shown in FIG. 3, the blue laser light may be emitted from the LD 11a is converted into parallel light beams by the collimator lens 121a and reflected by the beam splitter 122a before reaching the focusing lens 123. Furthermore, the green laser light emitted by the LD 11b may be converted into parallel light beams by the collimator lens 121b before being reflected by the beam splitter 122b. The reflected green laser light may pass through the beam splitter 122a and reach the focusing lens 123. Furthermore, the red laser light emitted by the LD 11c may be converted into parallel light beams by the collimator lens 121c, passes through the beam splitters 122a and 122b and reach the focusing lens 123.

The focusing lens 123 may be an optical element that focuses the various laser lights entering through the beam splitter 122a from the LDs (11a to 11c) onto a light reflecting face of the MEMS mirror 124. The laser light emitted from the focusing lens 123 may reach the MEMS mirror 124 via the beam splitter 125.

The MEMS mirror 124 may be an optical reflection element that reflects laser light focused by the focusing lens 123. The MEMS mirror 124 may be driven in a bi-axial direction to change the direction the laser lights are reflected in, causing the laser light to be reflected as the scanning laser light 7. The scanning laser light 7 may pass through the window 10a in the housing 10 and a light emission hole 15a discussed below, thereby being emitted out of the housing 10 and the main enclosure 15 and projected onto the combiner 82 of the windshield 81.

The thermistor 13 may be a temperature sensor that is provided inside the housing 10 to measure the ambient temperature around the LDs (11a to 11c). The temperature of the LDs (11a to 11c) may be estimated on the basis of the temperature detected by the thermistor 13. The information of the temperature detection result by the thermistor 13 may be sent to the control unit 25. Multiple ones of the thermistor 13 may be provided corresponding to each one of the LDs (11a to 11c), as well.

The heating and cooling parts (14a to 14c) may heat or cool the corresponding LD (one of 11a to 11c) corresponding to the temperature detected by the thermistor 13. The heating and cooling parts (14a to 14c) may comprise heat conducting members (one each of 141a to 141c), Peltier elements (one each of 142a to 142c), and heat sinks (one each of 143a to 143c).

The heat conducting members (141a to 141 c) may be formed using a metal such as copper or silver or a ceramic material with high heat conductivity and transfer heat between the corresponding LDs (one each of 11a to 11c) and the Peltier elements (one each of 142a to 142c).

The Peltier elements (142a to 142c) may be thermoelectric elements which utilize the Peltier effect. The heat sinks (143a to 143c) may be heat releasing members for cooling corresponding ones of the Peltier elements (142a to 142c).

The housing 10, the LD driver 16, the mirror servo part 17, the heating and cooling driver 18, the power source 19, the power source controller 20, the input and output I/F 22, the operation part 23, the storage part 24, and the control unit 25 may be mounted in the main enclosure 15. The light emission hole 15a through which is emitted the scanning laser light 7 which is emitted from the optical system 12 through the window 10a of the housing 10 may be formed in the main enclosure 15.

An LD driver 16 may be a LD driving unit which provides drive control of the LDs (11a to 11c) and includes a blue LD driver (not shown in the drawings), a green LD driver (not shown in the drawings), and a red LD driver (not shown in the drawings). The blue LD driver may perform drive control of light emission and the like of the LD 11a. The green LD driver may perform drive control of light emission and the like of the LD 11b. The red LD driver may perform drive control of light emission and the like of the LD 11c.

The mirror servo part 17 may be a drive controller that provides drive control for the MEMS mirror 124 based on a control signal input from the control unit 25. The mirror servo part 17 may drive the MEMS mirror 124 in response to a horizontal synchronization signal H-Sync from the control unit 25 and horizontally deflects the reflection direction of the laser light from the MEMS mirror 124. The mirror servo part 17 drives the MEMS mirror 124 in response to a vertical synchronization signal V-Sync from the control unit 25 and vertically deflects the reflection direction of the laser light from the MEMS mirror 124.

The heating and cooling driver 18 may provide control for heating and cooling operations of the LDs (11a to 11c) by the heating and cooling parts (14a to 14c).

The power source 19 may receive power from a power source such as a storage battery (not shown in the drawings) of the vehicle 8. The power source controller 20 may convert the power supplied by the power source 19 into a predetermined voltage value and current value corresponding to the various component parts of the projector 1 and supply the converted power to the various component parts.

The input and output I/F 22 may be an interface for performing wired or wireless communication with the HUD microcomputer 4 and the like. The control unit 25 may communicate with the HUD microcomputer 4 via the input and output I/F 22. The operation part 23 may be a part that receives operation input from the user. The information input as operations may be transmitted to the control unit 25 and reflected in operation of the projector 1.

The storage part 24 may be a non-volatile storage medium that stores programs and control information used by the various component parts (e.g., the control unit 25) of the projector 1. The storage part 24 may also stores video information and the like that is projected onto the combiner 82.

The control unit 25 may control the various component parts of the projector 1 using the programs and control information and the like stored in the storage part 24. The control unit 25 may comprise a video processor 251, an LD controller 252, a heating and cooling controller 253, and a correction unit 254.

The video processor 251 may generate video information based on the programs stored in the storage part 24, information input from the input and output I/F 22, information stored in the storage part 24, and so on. The video processor 251 may convert the video information thus generated into red (R), green (G), and blue (B) video data. The three-color video data thus converted may be outputted to the LD controller 252.

The LD controller 252 may generate light control signals for the LDs (11a to 11c) based on the three-color video data and outputs this to the LD driver 16. The laser light emitted by the LDs (11a to 11c) based on the light control signals may be scanned in two dimensions by the driving of the MEMS mirror 124. A video image based on the video information may thus be projected onto the combiner 82 on the windshield 81. The operation of displaying the projected image of the video image based on the video information (i.e., projected display of the video image) may be done while the HUD unit 9 is in a normal operating state.

The heating and cooling controller 253 may output a control signal for providing drive control to the heating and cooling parts (14a to 14c) to the heating and cooling driver 18. The correction unit 254 may set the correction amount based on the correction amount information received from the HUD microcomputer 4 and corrects the timing of light emission by the LDs by the set correction amount.

### [Overall Operation of the HUD Unit]

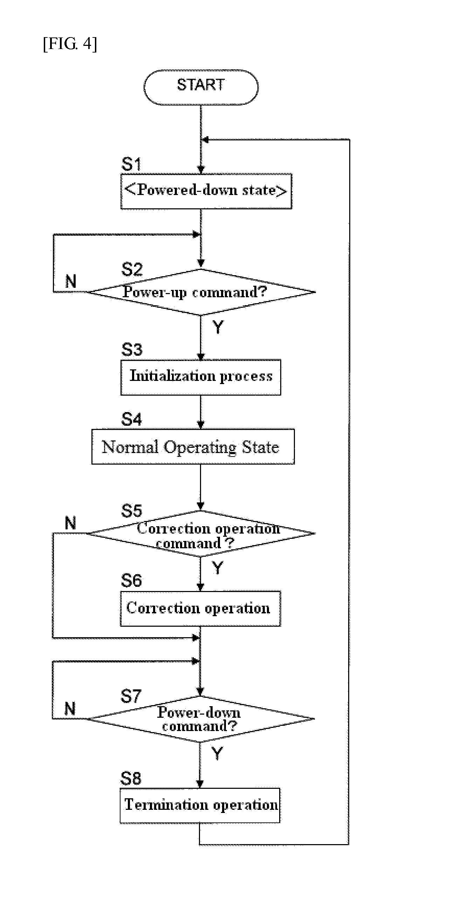

Overall operation of the HUD unit 9 is described next, with reference to the flow chart in FIG. 4. The HUD unit 9 may be assumed to be in a powered-down state (i.e., a state in which the power is off) when not being used by the user, for example (step S1). In the powered-down state main operations of the projector 1, such as projected display of the video image, may be stopped to minimize power consumption.

In the powered-down state, the HUD unit 9 may await a power-up command (step S2). When a power-up command is given (Y in step S2), the HUD unit 9 may execute an initialization operation (step S3) and enter the normal operating state (a state in which normal operations may be performed) (step S4). In the normal operating state projected display of the video image by the projector 1 may be performed and the HUD device 100 performs its originally intended function. When there is a correction operation command (request) from the host processor (Y in step S5), the HUD device 100 may execute a correction operation (step S6). The HUD device 100 may perform the correction operation when there has been a request in the normal operating state. The correction operation will be clarified in a later description. The HUD unit 9 may be specified not to perform a correction operation irrespective of a request.

In the normal operating state, the HUD unit 9 awaits a power-down command (step S7). When a power-down command is given (Y in step S7), the HUD unit 9 may execute a predetermined termination operation (step S8) and power down once again.

### [Correction of Light Emission Timing]

Incidentally, optical axis misalignment (misalignment of optical axes) sometimes occurs among the LDs (11a to 11c) in the projector 1. Especially when the ambient temperature rises, the housing 10 or adhesive becomes deformed, resulting in the locations where optical components are attached tending to fluctuate. The degree of optical axis misalignment can become very large. The degree of optical axis misalignment depends on temperature to a significant amount. When optical axis misalignment occurs, misalignment in scanning occurs among the LDs (11a to 11c).

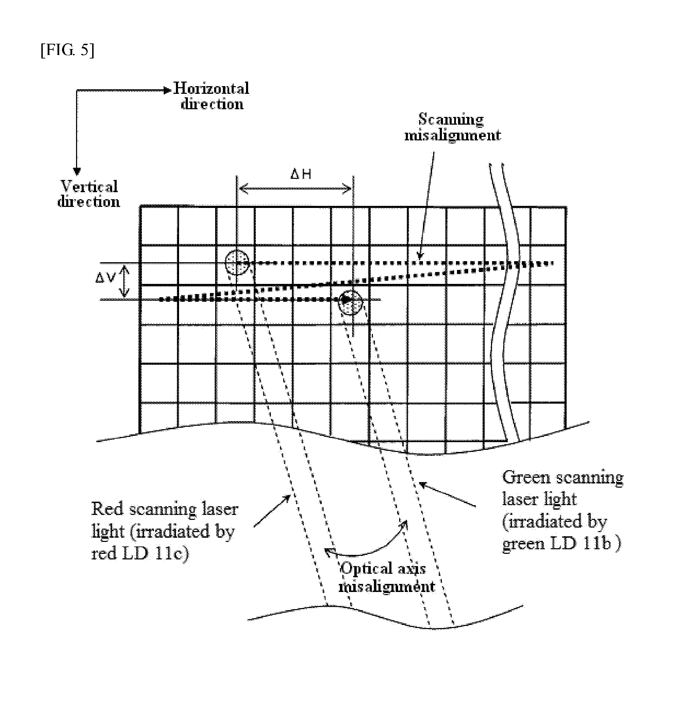

Scanning misalignment among the LDs (11a to 11c) is described next, with reference to FIG. 5. FIG. 5 gives as an example scanning in which optical axis misalignment has occurred between red scanning laser light and green scanning laser light. When optical axis misalignment occurs, the pixels illuminated by the green scanning laser light (pixels in the projected image) may shift relative to pixels illuminated by the red scanning laser light. The illumination position of the red scanning laser light may be used as a reference, and the illumination position of the green scanning laser light may shift horizontally (H) by ΔH and vertically (V) by ΔV.

Optical axis misalignment therefore may occur between the red LD 11c and the green LD 11b by an amount indicated by the dotted arrow in FIG. 5. This scanning misalignment may cause the video image projected onto the projector 1 to be misaligned relative to where it ought to be projected, which may prevent proper display of the video image.

In the example given in FIG. 5, using the red LD 11c as a reference, for example, scanning of the green LD 11b may be seen as running ahead by the amount indicated by the dotted arrow. Therefore, by delaying scanning of the green LD 11b by the same amount, i.e., delaying the timing of light emission in the green LD 11b, the scanning misalignment may be resolved.

The degree of scanning misalignment among the LDs (11a to 11c) is determined by the degree of optical axis misalignment among the LDs (11a to 11c). Accordingly, the HUD unit 9 may detect the degree of optical axis misalignment among the LDs (11a to 11c) to find the degree of scanning misalignment, and correct the light emission timings one or more of the LDs (11a to 11c) to resolve the scanning misalignment.

To describe this more specifically, the HUD microcomputer 4 (mainly the correction amount information acquisition unit 41) may perform a predetermined correction amount information acquisition process to acquire the correction amount information for light emission timing appropriate for the current conditions. This correction amount information may be sent to the projector 1. The projector 1 (correction unit 254) may receive the correction amount information from the HUD microcomputer 4 and set the correction amount based on this information. The projector 1 may correct the light emission timing thereafter by an amount equal to the set correction amount.

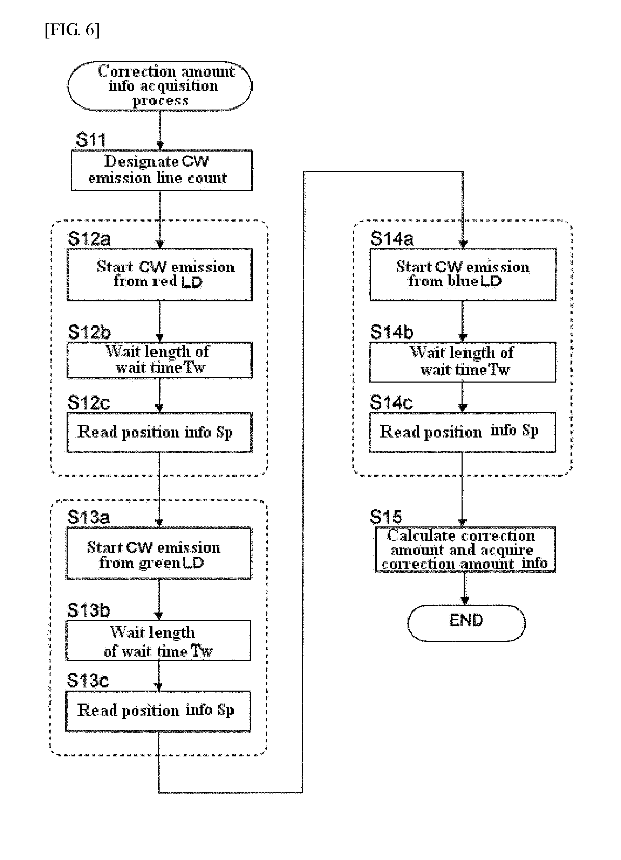

The specific content of the correction amount information acquisition process is described next, with reference to the flow chart in FIG. 6.

First, the HUD microcomputer 4 may designate in the projector 1 the number of scan lines when causing the LDs (11a to 11c) to emit a continuous wave (CW) (CW emission line count) (step S11). The projector 1, once this designation is received and the configuration of the emission line count is finished, may send a response message to the HUD microcomputer 4.

Next, the HUD microcomputer 4 may request the projector 1 to start CW emission for the red LD 11c. When the projector 1 receives this request, it may cause the red LD 11c to perform CW emission and start an operation for performing scanning using this light for the number of lines in the CW emission line count (step S12a), and then may send a response message to the HUD microcomputer 4.

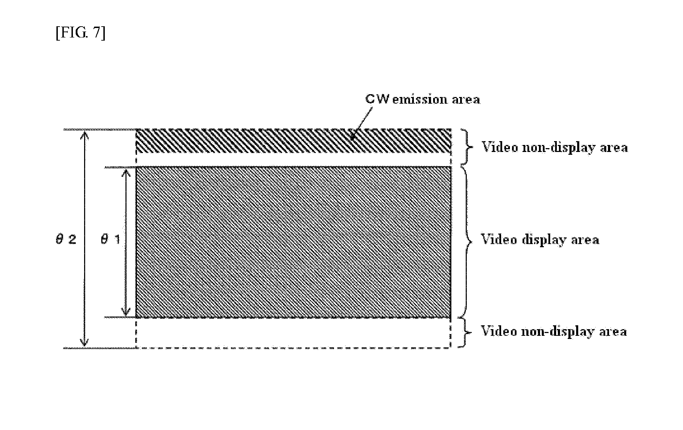

FIG. 7 schematically shows the position of the CW emission area where this scanning is performed (i.e., scanning using the CW emission light). The video display area shown in FIG. 7 is the area in which the projected image based on the video image information is displayed, and is an area in which a projection angle θ1 may be no more than 7.5°, for example. Moreover, the video non-display area shown in FIG. 7 may be where the projected image based on the video image information is not displayed, but illumination of light from the projector 1 is possible. The video non-display area may be, for example, an area where the projection angle θ2 is 8.5° or less, minus the video display area.

The CW emission area corresponding to the CW emission line count may be configured so as to be wholly included inside the video non-display area, as shown in FIG. 7. Therefore, during scanning using light from the CW emission, light from the LDs may be emitted pointed outside of the video display area.

While scanning using the light from the CW emission is being performed, part of the light emitted by the LD 11c may be guided to the PSD 2 by the beam splitter 125. The light may thereby be input to the PSD 2, and the position of this light may be detected (i.e., the position of the light in the PSD 2). The position information Sp corresponding to the result of this detection may be inputted to the HUD unit 4.

Returning to FIG. 6, the HUD microcomputer 4 may wait some amount of time equal to a predetermined wait time Tw, once the CW emission has begun from the red LD 11c (step S12b). Immediately after the CW emission begins, setup time may be needed until output from the PSD 2 is assured, and therefore setup time may be needed for the value of the position information Sp as well. Accordingly, the HUD microcomputer 4 may wait the wait time Tw in order to acquire the position information Sp in a stable manner. The wait time Tw may be configured to a length of time which is estimated to be necessary to secure the output from the PSD 2 (e.g., 100 us).

After waiting, the HUD microcomputer 4 may read the position information Sp (step S12c). The HUD microcomputer 4 may thereby acquire the position information Sp for the red LD 11c.

Thereafter, the same process as in steps S12a through S12c may be repeated for the green LD 11b (steps S13a to S13c). The HUD microcomputer 4 may thereby acquire the position information Sp for the green LD 11b. Thereafter, again, the same process as in steps S12a through S12c may be repeated for the blue LD 11a (steps S 14a to S14c). The HUD microcomputer 4 may thereby acquire the position information Sp for the green LD 11a.

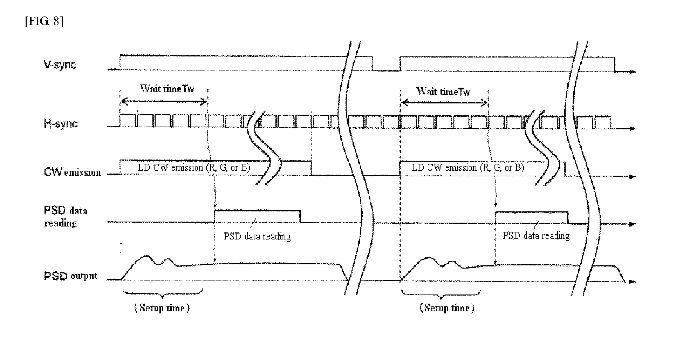

FIG. 8 presents a timing chart including the vertical synchronization signal V-sync, the horizontal synchronization signal H-sync, the CW emissions for the LDs, reading of the PSD data (position information Sp), and output from the PSD 2 during the processes in steps S12a through S 14c.

As shown in FIG. 8, the rising edge of the vertical synchronization signal V-sync may act as a trigger that initiates the CW emission for individual LDs (red, green, or blue). After the CW emission starts and the wait time Tw has been waited, the HUD microcomputer 4 may read the PSD data. As shown in FIG. 8, immediately after the CW emission from the LDs begins, setup time may be needed to secure the PSD 2 output, but once the wait time Tw has elapsed, this is complete. The HUD microcomputer 4 may therefore read the PSD data in a stable manner.

The HUD microcomputer 4 may acquire the position information Sp for all the LDs (11a to 11c) through this process. The HUD microcomputer 4 may use this position information Sp to calculate an accurate correction amount, and acquire the correction amount information (step S15).

To describe this in more detail, first the HUD microcomputer 4 may use one of the LDs (11a to 11c) as a reference LD and detect the degree of optical axis misalignment of the other LDs relative to the reference LD. Then the HUD microcomputer 4 may calculate the correction amount based on the degree of optical axis misalignment thus detected.

For example, if the red LD 11c is used as the reference LD, the relative distance of the light spot positions between red and green (i.e., between the red LD 11c and the green LD 11b) may be calculated for the X and Y axes (e.g., for directions corresponding to horizontal and vertical). The results of this calculation may express the degree of optical axis misalignment between red and green.

The relative distance of the light spot positions between red and blue (i.e., between the red LD 11c and the blue LD 11a) may be calculated for the X and Y axes. The results of this calculation may express the degree of optical axis misalignment between red and blue. On the basis of the results of the calculations it may be possible to know the values of ΔH and ΔV shown in FIG. 5, making it possible to calculate an accurate correction amount for the green LD 11b and the blue LD 11a. The correction amount for the reference LD (the red LD 11c in this example) may be zero.

Which of the LDs (11a to 11c) to use as the reference LD may be fixed from the start or it may be configured so as to allow updating. For example, it may also be possible for the HUD microcomputer 4 to detect which of the LDs (11a to 11c) has the smallest degree of optical axis misalignment from a predetermined reference axis and set the detected LD as the reference LD. In this case, for example, the LD whose position in the position information Sp is closest to the reference axis point (e.g., the origin point in the X-Y coordinates) corresponds to the LD with the smallest degree of optical axis misalignment from the reference axis.

When the correction amount information has been acquired in this manner, the correction amount information may be sent to the projector 1 and the correction amount may be set in the projector 1, as described above. The projector 1, by correcting the timing of light emission by an amount corresponding to the correction amount which has been set (i.e., by the correction amount calculated by the HUD microcomputer 4), may appropriately project and display the video image. This process, whereby the correction amount information acquisition process is performed and the correction amount is set, may be performed during initialization, for example.

When executing the correction amount information acquisition process as described above, an operation which measures the position of the light from each of the LDs (11a to 11c) in the PSD 2 may be executed (measurement operation), and the degree of optical axis misalignment among the LDs (11a to 11c) may be detected based on the results of this measurement. This measurement operation may be such that light from the LDs (11a to 11c) may be emitted in order towards the video non-display area and part of the light emitted by the LDs (11a to 11c) may be inputted to the PSD 2. Therefore, it is possible to prevent the light during the measurement operation from entering the video display area, diminishing the experience of the user.

The degree of optical axis misalignment varies depending on the circumstances at the time (particularly temperature) and therefore the appropriate correction amount also varies. The correction amount may therefore be updated according to the circumstances. Keeping this in mind, the correction amount information acquisition process may be performed and the correction amount updated repeatedly(e.g., periodically).

However, because the correction amount information acquisition process involves a process whereby each LD is caused to emit CW light individually, if the correction amount information acquisition process is done in the normal operating state, there may be the risk of interference with the original intended video display by the projector 1. Accordingly, it may be desirable that the HUD unit 9 is configured so as to update the correction amount without performing the correction amount information acquisition process in the normal operating state. An HUD unit 9 thus configured is described below as the second embodiment.

### 2. Second Example

A second example is described next. The second example may be substantially similar as that of the above one or more embodiments, except as relates to correction of light emission timing. In the following description, emphasis is placed on descriptions of areas of difference with the first example. Redundant descriptions are omitted.

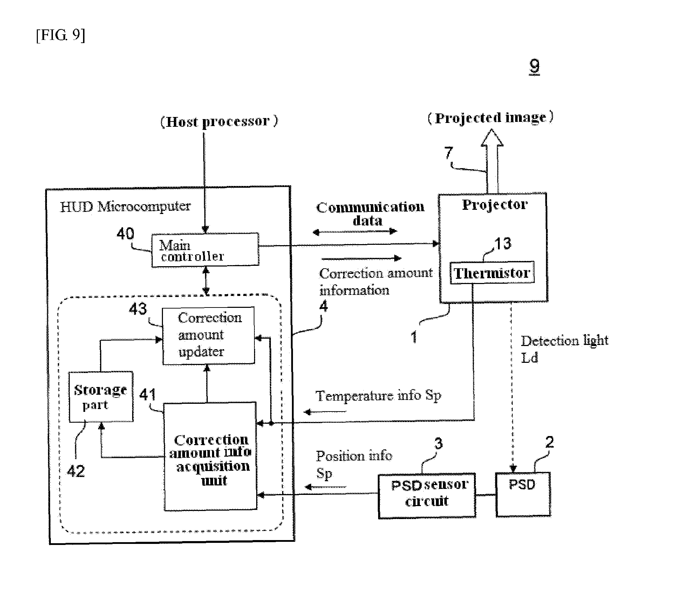

FIG. 9 is a schematic view of an HUD unit 9 according to one or more embodiments. As shown in the drawing, the HUD microcomputer 4 may receive temperature information St from the projector 1. This temperature information St may be information on temperature detected by the thermistor 13 optionally included in the projector 1. The degree of optical axis misalignment among the LDs (11a to 11c) may be strongly correlated with this temperature.

The HUD microcomputer 4 may comprise the main controller 40, the correction amount information acquisition unit 41, as well as a memory storage part 42 and a correction amount updater 43.

The correction amount information acquisition unit 41 may acquire correction amount information by executing the same correction amount information acquisition process as in the one or more embodiments discussed above. The correction amount information acquisition unit 41 may also acquire temperature when acquiring the correction amount information, on the basis of the input temperature information St. The correction amount information acquisition unit 41 may acquire correction amount information corresponding to the temperature (i.e., the temperature when the correction amount information is acquired). The correction amount information associated with the temperature may be sent to the memory storage part 42 and elsewhere.

The memory storage part 42 may use a flash memory, for example, and store a LUT (look-up table) that gives correction amounts for various temperatures. Every time the memory storage part 42 receives correction amount information associated with temperature from the correction amount information acquisition unit 41, LUT information may be updated so as to reflect this information.

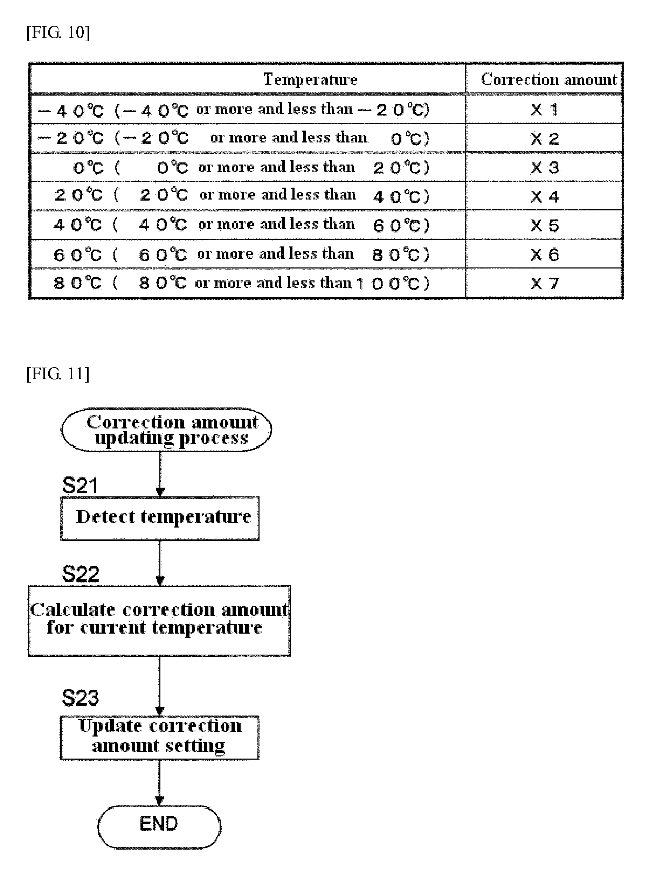

FIG. 10 shows an example of the content of LUT information. The LUT information given as an example in FIG. 10 includes information for correction amounts (×1 to ×7) for temperatures at 20°C intervals between -40°C and 80°C. Moreover, in this example, the correction amount associated with temperatures equal to "40°C or more and less than 60°C" may assumed to be the correction amount×5, which is for 40°C. For example, when information for a correction amount α is received associated with 48°C, the memory storage part 42 may store the correction amount α as the correction amount×5 for "40°C."

If there is no data for the correction amount×5 in the LUT data, data for the correction amount α may be added as the data for the correction amount×5, and if data already exists for the correction amount×5, this data may be updated to the data for the correction amount α. However, irrespective of the above example, any format may be used for the LUT data as long as it may represent correction amounts associated with temperatures (including temperature ranges).

The correction amount updater 43 may periodically (e.g., every 10 sec) execute a correction updating process when the HUD unit 9 is in the normal operating state. This correction amount updating process is described below, with reference to the flow chart shown in FIG. 11.

The correction amount updater 43 may detect the current temperature based on the input temperature information St (step S21). The correction amount updater 43 may calculate the correction amount corresponding to the current temperature based on the LUT information (step S22). Various formats may be used as the specific method of performing this calculation.

For example, if the correction information corresponding to the current temperature is included in the LUT information, then this correction information may be used as the calculation result as-is. If the correction amount corresponding to the current temperature is not included in the LUT information, then the correction amount corresponding to the current temperature may be calculated approximately from the correction amount for a nearby temperature which is already known in the LUT information (e.g., as a value of a straight line connecting two known points).

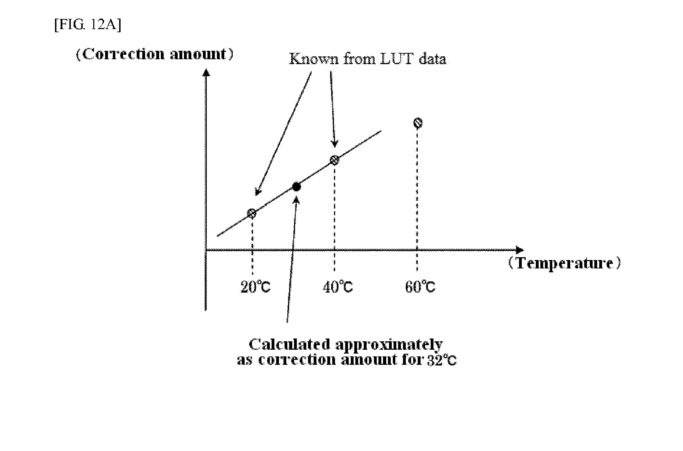

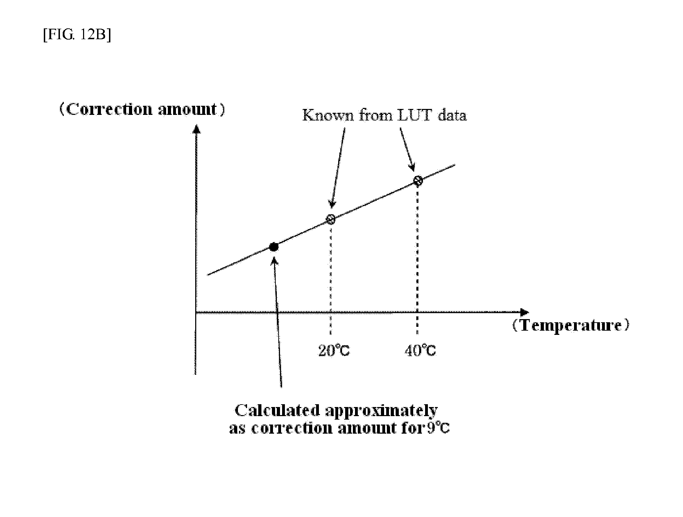

Specifically, if the current temperature is 32°C for example, then the correction amount corresponding to 32°C may be calculated approximately from the correction amount for 20°C and the correction amount for 40°C which are known from the LUT information, as shown in FIG. 12A. If the current temperature is 9°C, for example, and the correction amount for temperatures below 0°C is unknown in the LUT information, then the correction amount corresponding to 9°C may be calculated approximately from the correction amount for 20°C and the correction amount for 40°C which are known from the LUT information, as shown in FIG. 12B.

When the correction amount corresponding to the current temperature is calculated, the correction amount updater 43 may send this calculated correction amount information to the projector 1 and the setting for the correction amount may be updated in the projector 1 (step S23). The projector 1 (correction unit 254) may thereby update the correction amount which is set and execute correction of the light emission timing thereafter based on this updated correction amount.

With this correction amount updating process, the setting for the correction amount in the projector 1 may be updated without performing the correction amount information acquisition process, since the correction amount used in correction (i.e., the correction amount set in the projector 1) is determined based on the LUT information. Even if the correction amount updating process is executed in the normal operating state display of the video image by the projector 1 may not be hampered since no process involving causing the LDs to emit CW light individually is used. Moreover, since it is known that there is a strong correlation between appropriate correction amounts and temperature, the correction amount setting may be updated with this correction amount updating process.

It may be desirable for the process for updating the LUT information by acquiring the correction amount information to be executed when the HUD unit 9 is not in the normal operating state, so as to avoid hindering display of the video image by the projector 1. For example, this process may be performed when the HUD unit 9 is performing initialization or termination operations, or when the HUD video is not being displayed. An HUD unit 9 thus constituted is described below as the third embodiment.

### 3. Third Example

A third example is described next. In the following emphasis is placed on points not discussed in the above discussion, and redundant descriptions are omitted.

As described above, the HUD unit 9 according to one or more embodiments may execute an initialization operation (step S3) when transitioning from the powered-down state to the normal operating state. When a command (request) for correction is received from the host processor, the correction operation (step S6) may be performed. Even in the normal operating state, the HUD video display may not performed when executing the correction operation. The termination operation (step S8) may be executed when transitioning from the normal operating state to the powered-down state.

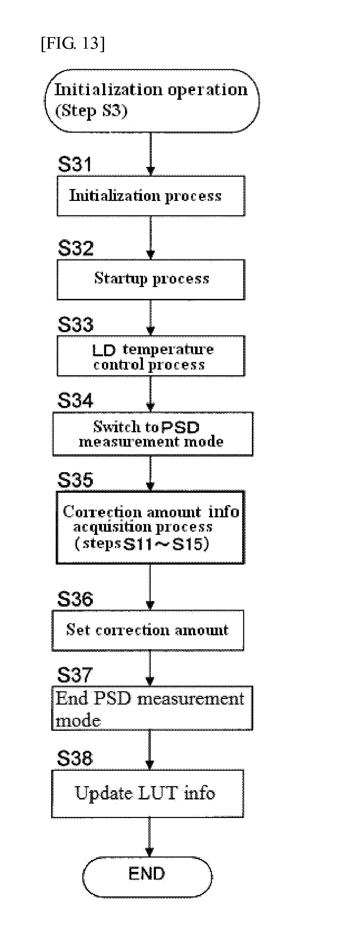

The specific content of the initialization process (step S3) is described next, with reference to the flow chart in FIG. 13.

First, the HUD microcomputer 4 may execute a predetermined initialization process (step S31) and then send a command for a startup process to the projector 1. In response the projector 1 may execute a predetermined startup process (step S32) and send a response message to the HUD microcomputer 4.

Next, the HUD microcomputer 4 may execute an LD temperature control process for controlling the temperature of the LDs (11a to 11c) so as to be within an appropriate range (a range which allows use) (step S33). The projector 1 may execute temperature adjustment of the LDs (11a to 11c) using the Peltier elements (142a to 142c) in response to the control command from the HUD microcomputer 4.

Next the HUD microcomputer 4 may send a command to the projector 1 to transition into PSD measurement mode (a mode in which the correction amount information acquisition process is executed). In response the projector 1 may transition into the PSD measurement mode (step S34) and send a response message to the HUD microcomputer 4.

Thereafter the HUD unit 9 may execute the correction amount information acquisition process (steps S11 to S15) described above (step S35). The correction amount information acquisition unit 41 may thereby acquire the correction amount information associated with the temperature.

When the correction amount information associated with the temperature is acquired, the correction amount updater 43 may set the correction amount in the projector 1 (step S36). Specifically, the correction amount information may be sent to the projector 1 and in response the projector 1 set the correction amount based on this correction amount information. Thereafter the projector 1 may send a response message to the HUD microcomputer 4.

Next the HUD microcomputer 4 may send a command to the projector 1 to terminate PSD measurement mode. In response the projector 1 may terminate the PSD measurement mode and return to normal mode (step S37), and send a response message to the HUD microcomputer 4.

The correction amount information acquisition unit 41 may update the LUT information based on the correction amount information associated with the temperature just acquired (step S38). The LUT information may thereby reflect the correction amount information thus acquired. Once these processes are complete, the initialization operation may end.

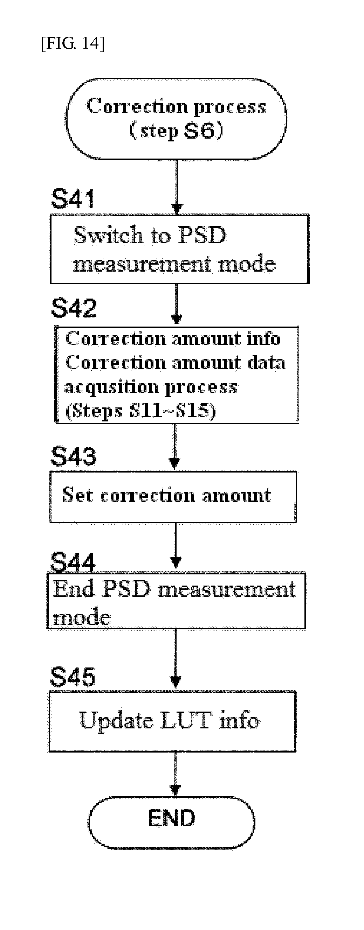

The specific content of the correction operation (step S6) is described next, with reference to the flow chart in FIG. 14.

First the HUD microcomputer 4 may send a command to the projector 1 to transition into the PSD measurement mode. In response the projector 1 may transition into the PSD measurement mode (step S41) and send a response message to the HUD microcomputer 4.

Next, the HUD unit 9 may execute the correction amount information acquisition process (steps S11 to S15) described above (step S42). The correction amount information acquisition unit 41 may thereby acquire the correction amount information associated with the temperature.

When the correction amount information associated with the temperature is acquired, the correction amount updater 43 may set the correction amount in the projector 1 (step S43). Specifically, the correction amount information may be sent to the projector 1 and in response the projector 1 may set the correction amount based on this correction amount information. Thereafter the projector 1 may send a response message to the HUD microcomputer 4.

Next the HUD microcomputer 4 may send a command to the projector 1 to terminate PSD measurement mode. In response the projector 1 may terminate the PSD measurement mode and return to normal mode (step S44), and send a response message to the HUD microcomputer 4.

The correction amount information acquisition unit 41 may update the LUT information based on the correction amount information associated with the temperature just acquired (step S45). The LUT information may thereby reflect the correction amount information thus acquired. Once these processes are complete, the correction operation may end.

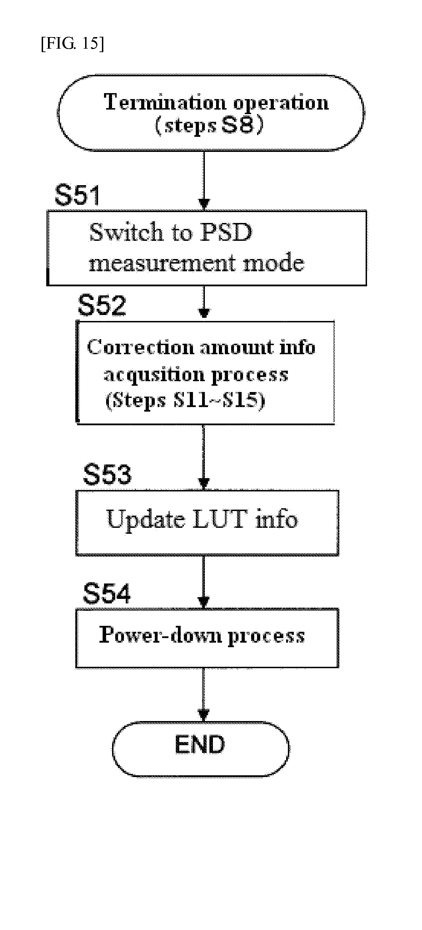

The specific content of the termination operation (step S8) is described next, with reference to the flow chart in FIG. 15.

First the HUD microcomputer 4 may send a command to the projector 1 to transition into PSD measurement mode. In response the projector 1 may transition into the PSD measurement mode (step S51) and send a response message to the HUD microcomputer 4.

Next, the HUD unit 9 may execute the correction amount information acquisition process (steps S11 to S15) described above (step S52). The correction amount information acquisition unit 41 may thereby acquire the correction amount information associated with the temperature.

When the correction amount information associated with the temperature is received, the correction amount information acquisition unit 41 may update the LUT information based on this correction amount information (step S53). The LUT information may thereby reflect the correction amount information thus acquired.

Next, the HUD microcomputer 4 may execute a power-down process in order to power down the projector 1 (powering down) (step S54). The HUD microcomputer 4 may realize the power-down process by sending a command to the projector 1 to power down. Once these processes are complete, the termination operation may end.

In one or more embodiments, a process for updating the LUT information by acquiring the correction amount information may be executed when executing the initialization operation (when moving from a powered-off state to the normal operating state) and when executing the termination operation (when moving from the normal operating state to a powered-down state). Therefore, the process to update the LUT information by acquiring the correction amount information may be done in such a way that display of the video image by the projector 1 is not hindered.

The process to update the LUT information by acquiring the correction amount information may also be executed during one or the other of the initialization operation or the termination operation instead of during both.

### 4. Other

As described above, the HUD unit 9 is provided with a projector 1. The projector 1 comprises the LDs (11a to 11c) which may emit scanning laser light red, green, and blue, and which may display a projected image by means of scanning the scanning laser light emitted by the LDs (11a to 11c). The HUD unit 9 may also be provided with a function unit (optical axis misalignment detector) which detects the degree of optical axis misalignment among the LDs (11a to 11c) and a function unit (correction unit) that corrects the light emission timings so as to minimize scanning misalignment among the LDs (11a to 11c) due to optical axis misalignment.

Scanning misalignment accompanying optical axis misalignment among the LDs (11a to 11c) may therefore be minimized. The scanning misalignment may be eliminated (i.e., minimized to zero), but as long as the light emission timings can be corrected to achieve a certain degree of minimization, a better projected image may be displayed compared to a case in which no correction is used.

Furthermore, the HUD unit 9 may be provided with a functional unit (correction amount information acquisition unit) that acquires correction amount information corresponding to the degree of optical axis misalignment among the LDs (11a to 11c). Correction of the light emission timings may be done using this correction amount information.

The HUD unit 9 as in the second and third embodiments may be provided with a functional unit (temperature detector) that detects the temperature, and, upon acquiring the correction amount information, execute an operation (first operation) whereby LUT information may be stored in association with the temperature when the correction amount is acquired, and an operation (second operation) whereby the correction amount information used in correcting the light emission timings may be determined based on this LUT information.

The first operation may be performed when not in the normal operating state and the second operation may be performed in the normal operating state. It is therefore easy to update the correction amount in the normal operational state while preventing display of the projected video image from becoming hindered.

Besides the above embodiments, the constitution of the present invention can variously be modified within the scope of the invention. In other words, the above embodiments are in all respects examples and should not be thought of as limitations. The invention should be understood to include all modifications of equivalent significance as the claims and belonging to the scope of the claims as discussed above. Furthermore, the present invention may be used, for example, in an HUD device. While the disclosure includes a limited number of embodiments, those skilled in the art, having benefit of this disclosure, will appreciate that other embodiments may be devised which do not depart from the scope of the present disclosure. Furthermore, those of ordinary skill in the art would appreciate that certain "units," "parts," or "portions" of one or more embodiments of the present invention may be implemented by a circuit, processor, etc. using known methods. Accordingly, the scope should be limited only by the attached claims.

### [Explanation of the Reference Numerals]

- 100: HUD device
- 1: Projector
- 2: PSD (light position sensor)
- 3: PSD sensor circuit
- 4: HUD microcomputer
- 10: Housing
- 10a: Window
- 11a-11c: Laser diodes (light sources)
- 12: Optical system
- 121a-121c: Collimator lenses
- 122a, 122b: Beam splitters
- 123: Focusing lens
- 124: MEMS mirror
- 125: Beam splitter
- 13: Thermistor (temperature sensor)
- 14a-14c: Heating and cooling parts
- 141a-141c: Heat conducting members
- 142a-142c: Peltier elements
- 143a-143c: Heat sinks
- 15: Main enclosure
- 15a: Light emission hole
- 16: LD driver
- 17: Mirror servo part
- 18: Heating and cooling driver
- 19: Power source
- 20: Power source controller
- 22: Input and output I/F
- 23: Operation part
- 24: Storage part
- 25: Control unit
- 251: Video processor
- 252: LD controller
- 253: Heating and cooling controller
- 254: Correction unit
- 41: Correction amount information acquisition unit
- 42: Memory storage part
- 43: Correction amount updater
- 44: Main controller
- 6: Line of sight of the user
- 7: Scanning laser light
- 8: Vehicle
- 81: Windshield
- 82: Combiner
- 9: HUD unit

## Claims

1. A projector device (9) comprising:
a plurality of light sources (11a, 11b, 11c) that emits lights of mutually differing colors, wherein the projector device (1) displays a projected image by scanning the lights emitted by the plurality of light sources (11a, 11b, 11c);
an optical axis misalignment detector (4) that detects a degree of optical axis misalignment among the plurality of light sources (11a, 11b, 11c); and
a correction unit (254) that corrects a timing of the emission of the plurality of light sources (11a, 11b, 11c) to minimize the degree of optical axis misalignment among the plurality of light sources (11a, 11b, 11c).

2. The projector device (9) as claimed in claim 1, further comprising a correction amount information acquisition unit (41) that acquires correction amount information in correspondence to the degree of optical axis misalignment, wherein the correction unit (254) uses the correction amount information to correct the timing of the emission of the plurality of light sources (11a, 11b, 11c).

3. The projector device (9) as claimed in claim 2, further comprising a temperature detector (13), wherein the projector device (1) is configured to execute a first operation to store correction amount information along with a temperature detected by the temperature detector (13) when correction amount information acquisition unit (41) acquires the correction amount information, and wherein the projector device (1) is configured to execute a second operation to determine the correction amount information based on information stored prior to the correction unit (254) correcting the timing of the emission of the plurality of light sources (11a, 11b, 11c) in the second operation.

4. The projector device (9) as claimed in claim 3, wherein the first operation is executed when the projector device (9) is not in a normal operational state, and wherein the second operation is executed and the projected image of a video image is displayed when the projector device (9) is in the normal operational state.

5. The projector device (9) as claimed in claim 4, wherein the first operation is executed when the projector device (9) transitions from a powered-down state to the normal operational state.

6. The projector device (9) as claimed in claim 4 or claim 5, wherein the first operation is executed when the projector device (9) transitions from the normal operating state to the powered-down state.

7. The projector device (9) as claimed in any one of claims 4 to 6, wherein the first operation is executed when the projector device (9) receives a request in the normal operational state.

8. The projector device (9) as claimed in any one of claims 1 to 7, further comprising a light position sensor (2), wherein the optical axis misalignment detector (4) executes a measurement operation that measures a position of light for each of a plurality of light sources (11a, 11b, 11c) in the light position sensor (2) and the degree of optical axis misalignment is detected based on a result of the measurement.

9. The projector device (9) as claimed in claim 8, wherein each of the plurality of light sources (11a, 11b, 11c) emits light in sequence to an area outside an area where the projected image of the video image is displayed, and wherein a portion of the emitted light enters the light position sensor (2).

10. The projector device (9) as claimed in any one of claims 1 to 9, wherein the plurality of light sources (11a, 11b, 11c) comprises at least three laser diodes and wherein the optical axis misalignment detector (4) uses one of the plurality of light sources (11a, 11b, 11c) as a reference light source to detect, for each of the other plurality of light sources (11a, 11b, 11c), the degree of optical axis misalignment with respect to an optical axis of the reference light source.

11. The projector device (9) as claimed in claim 10, wherein the optical axis misalignment detector (4) detects the smallest degree of the optical axis misalignment among the plurality of light sources (11a, 11b, 11c) using a predetermined reference axis and uses the plurality of light sources (11a, 11b, 11c) as the reference light source.

12. An HUD device (100) comprising the projector device (9) as claimed in any one of claims 1 to 11.

13. A projecting method comprising:
emitting lights of mutually differing colors by a plurality of light sources (11a, 11b, 11c);
displaying a projected image by scanning the lights emitted by the plurality of light sources (11a, 11b, 11c);
detecting a degree of optical axis misalignment among the plurality of light sources (11a, 11b, 11c); and
correcting a timing of the emission of the plurality of light sources (11a, 11b, 11c) to minimize the degree of optical axis misalignment among the plurality of light sources (11a, 11b, 11c).

14. The projecting method as claimed in claim 13, further comprising acquiring correction amount information in correspondence to the degree of optical axis misalignment, wherein the correcting comprises using the correction amount information to correct the timing of the emission of the plurality of light sources (11a, 11b, 11c).
